# FASCICULE DE BREVET EUROPEEN

(11) **EP 3 640 615 B1**
(45) Date de publication et mention de la délivrance du brevet: **04.01.2023**
(21) Numéro de dépôt: 19203896.6
(22) Date de dépôt: 17.10.2019
(51) Int. Cl.: G01J 5/34

(54) **CAPTEUR PYROELECTRIQUE AVEC REVÊTEMENT AMÉLIORÉ DE RÉSISTANCE CONTRE L'ABRASION**
PYROELEKTRISCHER SENSOR MIT VERBESSERTER VERKLEIDUNG DES WIDERSTANDS GEGEN ABRIEB
PYROELECTRIC SENSOR WITH IMPROVED COATING FOR ABRASION RESISTANCE

(30) Priorité: 19.10.2018 FR 1859680
(43) Date de publication de la demande: 22.04.2020
(73) Titulaire: Commissariat à l'énergie atomique et aux énergies alternatives, 75015 Paris (FR)
(72) Inventeur: REVAUX, Amélie, 38054 Grenoble Cedex 09 (FR); BENWADIH, Mohammed, 38054 Grenoble Cedex 09 (FR); MAINGUET, Jean-François, 38054 Grenoble Cedex 09 (FR)
(74) Mandataire: Brevalex

(56) Documents cités:
- EP-A1- 3 276 585
- WO-A1-2018/020176
- FR-A1- 3 044 408

## Description

### DOMAINE TECHNIQUE

L'invention se rapporte à un capteur de motifs thermiques de type capteur pyroélectrique. Un tel capteur forme par exemple un capteur d'empreinte papillaire, notamment un capteur d'empreinte digitale.

### ÉTAT DE LA TECHNIQUE ANTÉRIEURE

Un capteur pyroélectrique exploite les propriétés de pyroélectricité d'un matériau, c'est-à-dire sa capacité à générer des charges électriques en réponse à une variation de température.

Un tel capteur comporte des capacités pyroélectriques, formant chacune un transducteur pour traduire une variation temporelle de température en un signal électrique. Chaque capacité pyroélectrique comporte une portion en matériau pyroélectrique, disposée entre une électrode inférieure et une électrode supérieure. L'une des électrodes est mise à un potentiel constant, et forme une électrode de référence. L'autre électrode, nommée électrode de collecte de charges, collecte des charges pyroélectriques générées par le matériau pyroélectrique en réponse à une variation de température. L'électrode de collecte de charges est connectée à un circuit de lecture, pour mesurer la quantité de charges collectée.

En fonctionnement, un objet est appuyé contre une surface de contact du capteur.

La détection peut exploiter simplement une différence de température entre cet objet et ladite surface de contact. Le capteur réalise alors une détection de type passif.

Dans le cas d'une détection d'empreinte digitale, le doigt est appuyé contre la surface de contact du capteur.

Au niveau des crêtes de l'empreinte, la peau est en contact physique direct avec le capteur. Un transfert thermique entre la peau et la surface de contact du capteur s'effectue par conduction, ce qui conduit à une première variation temporelle de température.

Au niveau des vallées de l'empreinte, la peau n'est pas en contact physique direct avec le capteur. Un transfert thermique entre la peau et la surface de contact du capteur s'effectue à travers l'air. L'air présente des propriétés d'isolant thermique, ce qui conduit à une seconde variation temporelle de température, moins importante.

La différence entre ces deux variations temporelles de température se traduit par une différence entre les signaux mesurés par les capacités pyroélectriques, selon qu'elles se trouvent sous une vallée ou sous une crête de l'empreinte. L'image de l'empreinte présente alors un contraste qui dépend de cette différence.

Après quelques secondes, la température du doigt et la température de la surface de contact s'homogénéisent, et il n'est plus possible d'obtenir un contraste satisfaisant. Pour pallier à cet inconvénient, on ajoute des moyens de chauffage sous la surface de contact, pour dissiper une certaine quantité de chaleur dans chaque pixel du capteur. La variation de température mesurée dans chaque pixel du capteur se rapporte alors à la mesure dans laquelle cette quantité de chaleur est évacuée du pixel. Cela permet d'améliorer et de conserver au cours du temps, le contraste d'une image acquise à l'aide dudit capteur. Le capteur réalise alors une détection de type actif. Un tel capteur est décrit par exemple dans la demande de brevet EP2385486. D'autres exemples sont donnés dans les documents FR3044408, WO2018020176 et EP3276585.

Dans le cas d'une détection d'empreinte digitale, la variation de température est importante au niveau des vallées de l'empreinte, où la chaleur n'est transférée au doigt qu'à travers l'air, et plus faible au niveau des crêtes de l'empreinte, où la chaleur est transférée efficacement au doigt, par conduction.

Quel que soit le type de détection mis en œuvre, un capteur pyroélectrique comporte avantageusement un revêtement de protection contre l'abrasion, pour protéger des couches ou étages inférieurs à l'égard de l'usure mécanique liée aux contacts répétés avec les objets à imager, notamment des empreintes dans le cas d'un capteur d'empreinte papillaire.

Le revêtement de protection contre l'abrasion peut être constitué d'une couche de résine résistante à l'abrasion. Afin d'offrir une protection suffisante, la couche de résine présente généralement une épaisseur supérieure à 20 µm. Un inconvénient d'une telle couche de résine est cependant qu'elle ralentit les échanges de chaleur entre les capacités pyroélectriques et un objet à imager, du fait de la forte épaisseur de matériau à traverser, et provoque une perte de résolution du fait de la conduction latérale de la chaleur vers les pixels voisins. La lecture des pixels du capteur est donc ralentie, ce qui peut poser des difficultés notamment pour des capteurs de grandes dimensions, avec beaucoup de pixels.

Une solution connue consiste à réaliser le revêtement de protection contre l'abrasion en DLC (diamond like carbon). Ce matériau présente en effet une très forte résistance à l'abrasion, de sorte qu'il offre une protection suffisante même en épaisseur réduite. Une couche de DLC d'épaisseur inférieure à 1 µm, notamment entre 200 nm et 300 nm, offre par exemple une protection suffisante. Cette gamme d'épaisseurs donne accès à des vitesses élevées de transmission de la chaleur à travers le revêtement de protection contre l'abrasion. En revanche, il reste technologiquement difficile et coûteux de maîtriser avec autant de précision l'épaisseur déposée de DLC, et les températures de dépôt sont difficilement compatibles avec certains composés constituant le capteur pyroélectrique (en particulier le PVDF).

Un objectif de la présente invention est de proposer une solution pour protéger un capteur pyroélectrique à l'égard de l'usure mécanique liée aux contacts répétés avec les objets à imager, qui offre une vitesse élevée de transmission de la chaleur et une diffusion latérale réduite, et dont la mise en œuvre ne présente pas de difficulté technologique particulière.

### EXPOSÉ DE L'INVENTION

Cet objectif est atteint avec un capteur de motifs thermiques tel que défini dans la revendication 1, comportant plusieurs pixels disposés sur un substrat, chaque pixel comportant au moins une capacité pyroélectrique formée par au moins une portion de matériau pyroélectrique disposée entre au moins une électrode inférieure et au moins une électrode supérieure, avec l'électrode inférieure disposée entre le substrat et la portion de matériau pyroélectrique, le capteur comportant un revêtement externe dit de protection contre l'abrasion, situé du côté opposé au substrat.

Les piliers forment des structures de hauteur sensiblement égale à l'épaisseur de la couche de résistance à l'abrasion, par exemple à 20% près, voire à 5% près, avec des faces inférieures respectives de chacun des piliers réparties de préférence dans un même plan parallèle au plan du substrat. Les piliers prennent par exemple chacun la forme d'un cylindre, ou d'un empilement de cylindres, de hauteur sensiblement égale à l'épaisseur de la couche de résistance à l'abrasion. Le diamètre des piliers, dans un plan parallèle au substrat, est avantageusement inférieur à un pas de pixel du capteur de motifs thermiques, et de préférence inférieur à la moitié de ce pas.

Selon l'invention, le revêtement de protection contre l'abrasion comprend une couche dite couche de résistance à l'abrasion, et une pluralité de piliers répartis dans la couche de résistance à l'abrasion, les piliers présentant une conductivité thermique strictement supérieure à celle de la couche de résistance à l'abrasion. En d'autres termes, les piliers présentent une conductivité thermique élevée, et s'étendent dans une couche présentant une faible conductivité thermique. Dit encore autrement, le revêtement de protection contre l'abrasion présente une structure hétérogène constituée de piliers hautement conducteurs de chaleur entourés d'un matériau faiblement conducteur de chaleur. Un rapport entre la conductivité thermique des piliers et la conductivité thermique de la couche de résistance à l'abrasion est avantageusement supérieur ou égal à 2, voire supérieure ou égal à 5. Ce rapport peut même atteindre 10, 100 et même 1000.

Les piliers sont entourés latéralement par le matériau de la couche de résistance à l'abrasion. En particulier, ils sont entièrement entourés par le matériau de ladite couche, dans des plans parallèles au plan du substrat.

La couche de résistance à l'abrasion présente une fonction de protection à l'égard de l'abrasion. L'abrasion désigne ici une usure mécanique, par frottement. La résistance à l'abrasion désigne la capacité à résister à cette usure mécanique.

Dans le revêtement de résistance à l'abrasion, la chaleur se propage rapidement à travers les piliers, et lentement à travers la couche de résistance à l'abrasion. On peut ainsi combiner, dans le revêtement de protection contre l'abrasion, des transferts thermiques rapides selon un axe orthogonal au plan du substrat, et des transferts thermiques lents dans un plan parallèle au plan du substrat. Le rapport des vitesses de transferts thermiques est par exemple supérieur ou égal à 2, voire supérieur ou égal à 10 ou même supérieur ou égal à 100.

L'invention permet ainsi de limiter la diffusion latérale de chaleur au sein du revêtement de protection à l'abrasion, puisque les transferts de chaleur se font principalement par l'intermédiaire des piliers et que ces derniers sont noyés dans la couche de résistance à l'abrasion, de faible conductivité thermique. On évite ainsi des transferts de chaleur d'un pixel à l'autre du capteur pyroélectrique (diathermie), lors de la traversée du revêtement de protection à l'abrasion. De tels transferts de chaleur empêchent qu'un motif thermique sur la surface de contact du capteur pyroélectrique soit reproduit fidèlement au niveau des portions en matériau pyroélectrique. Ils pourraient se présenter avec un revêtement de protection contre l'abrasion constitué d'une couche épaisse d'un matériau bon conducteur thermique. En particulier, le matériau des piliers peut présenter de bonnes propriétés de résistance à l'abrasion (par exemple lorsque les piliers sont en titane ou en tungstène ou en DLC). Une solution évidente consisterait à utiliser une pleine couche du matériau des piliers, pour réaliser la protection à l'abrasion. Une telle solution entraînerait cependant une forte diathermie liée à la traversée du revêtement de résistance à l'abrasion. L'invention permet, en augmentant la vitesse des transferts thermiques à travers le revêtement de protection contre l'abrasion et en limitant les transferts thermiques latéraux, d'améliorer le contraste d'une image du motif thermique appliqué sur la surface de contact du capteur.

En complément ou en variante, l'invention permet de réduire la consommation électrique du capteur de motifs thermiques, en réduisant la quantité de chauffage apportée par les éléments de chauffage dans le cas d'un capteur à détection de type actif. En effet, l'augmentation de la vitesse verticale des transferts thermiques (selon un axe orthogonal au plan du substrat) permet qu'une quantité moindre de chaleur apportée par les éléments de chauffage engendre une même variation de température au niveau des capacités pyroélectriques, pour une même durée d'acquisition, en comparaison avec l'art antérieur.

L'augmentation de la vitesse verticale des transferts thermiques a également pour conséquence de réduire une durée nécessaire pour chauffer les capacités pyroélectriques à l'aide des éléments de chauffage puis ramener celles-ci à température ambiante, dans un capteur à détection de type thermique actif avec un adressage passif des pixels (sans transistors de sélection). On peut ainsi réduire une durée de lecture des pixels du capteur de motifs thermiques, jusqu'à la diviser d'un facteur 10 en comparaison avec l'art antérieur.

Puisque les transferts thermiques ont majoritairement lieu par l'intermédiaire des piliers, la couche de résistance à l'abrasion peut présenter une épaisseur élevée sans que cela n'impacte la vitesse des transferts thermiques. Cette dernière peut présenter par exemple une épaisseur supérieure à quelques micromètres, par exemple supérieure ou égale à 3 µm voire supérieure ou égale à 10 µm. Cette épaisseur est avantageusement supérieure ou égale à 5% d'un pas de pixel du capteur de motifs thermiques, voire supérieure ou égale à 10% et même supérieure ou égale à 100% de ce pas de pixel.

On s'affranchit ainsi des contraintes technologiques liées au dépôt d'une couche ultra-mince d'épaisseur inférieure au micromètre, en comparaison avec l'art antérieur utilisant une fine couche de DLC. En particulier, il n'est plus nécessaire de contrôler très précisément l'épaisseur déposée pour être certain que la protection contre l'abrasion est suffisante en chaque point de la surface de contact du capteur. Le même allègement de contraintes s'applique de la même manière à une éventuelle surépaisseur de la couche de résistance à l'abrasion, dépassant au-dessus des piliers et pouvant servir à protéger les piliers si ces derniers ne sont pas suffisamment résistant à l'abrasion.

En levant les contraintes relatives à l'épaisseur de la couche de résistance à l'abrasion, l'invention donne accès à une large gamme de matériaux pour réaliser cette dernière. On peut notamment utiliser des matériaux nécessitant d'être déposés en couche épaisse pour pouvoir offrir une protection suffisante contre l'abrasion. On peut notamment utiliser des matériaux moins chers et/ou plus faciles à déposer.

Le revêtement de protection contre l'abrasion selon l'invention, nommé également étage de protection contre l'abrasion, ou simplement couche de protection, forme ainsi une solution pour protéger un capteur pyroélectrique à l'égard de l'usure mécanique liée aux contacts répétés avec les objets à imager, offrant à la fois :
- des transferts thermiques rapides selon un axe orthogonal au plan du substrat, grâce aux piliers de conductivité thermique élevée ; et
- une mise en œuvre simple, puisque ces piliers peuvent s'étendre dans une couche de résistance à l'abrasion de forte épaisseur, dont la réalisation ne présente pas de difficulté technologique particulière.

De préférence, le revêtement de protection contre l'abrasion présente une épaisseur supérieure ou égale 5% d'un pas de répétition des pixels du capteur de motifs thermiques.

Le revêtement de protection contre l'abrasion peut présenter une épaisseur supérieure ou égale à 3 µm.

Avantageusement, l'épaisseur du revêtement de protection contre l'abrasion est supérieure ou égale à la hauteur des piliers, avec ladite épaisseur et ladite hauteur définies chacune selon un axe orthogonal au plan du substrat, et une différence entre l'épaisseur du revêtement de protection contre l'abrasion et la hauteur des piliers est inférieure ou égale à 10 %, voire inférieure ou égale à 5% de la hauteur des piliers.

De préférence, chaque pixel du capteur comporte une portion du revêtement de protection contre l'abrasion, ladite portion comportant un unique pilier.

Les piliers du revêtement de protection contre l'abrasion présentent avantageusement une conductivité thermique au moins dix fois supérieure à celle de la couche de résistance à l'abrasion.

Les piliers du revêtement de protection contre l'abrasion peuvent comprendre un métal ou du graphène.

La couche de résistance à l'abrasion peut comprendre un matériau à base de benzo-cyclo-butène.

La couche de résistance à l'abrasion est avantageusement en matériau électriquement isolant.

Selon un mode de réalisation avantageux, les pixels du capteur sont agencés en lignes et en colonnes, chaque pixel comporte en outre un élément de chauffage, apte à chauffer par effet Joule la portion en matériau pyroélectrique dudit pixel, et :
- les éléments de chauffage d'une même ligne de pixels sont formés ensemble d'un seul tenant, en une même bande de chauffage ;
- dans chaque pixel, l'une parmi l'électrode supérieure et l'électrode inférieure forme une électrode de collecte de charges, et les électrodes de collecte de charges d'une même colonne de pixels sont formées ensemble d'un seul tenant en une macro-électrode de collecte de charges ; et
- chaque pilier du revêtement de protection contre l'abrasion s'étend à travers une région d'intersection entre une projection orthogonale d'une bande de chauffage et une projection orthogonale d'une macro-électrode de collecte de charges, dans un plan parallèle au plan du substrat.

Les piliers du revêtement de protection contre l'abrasion sont avantageusement constitués chacun de plusieurs piliers élémentaires, superposés selon un axe orthogonal au plan du substrat.

L'invention couvre également un procédé de réalisation du revêtement de protection contre l'abrasion d'un capteur selon l'invention, tel que défini dans la revendication 12, dans lequel une étape de réalisation des piliers comprend l'utilisation d'une encre à base de particules de métal et/ou de graphène.

L'étape de réalisation des piliers peut comprendre un ou plusieurs dépôts localisés de l'encre, à l'aide d'une imprimante à jet d'encre.

De préférence, la réalisation du revêtement de protection contre l'abrasion comprend les étapes suivantes :
- réalisation de la couche de résistance à l'abrasion, munie d'ouvertures traversantes réparties selon un plan parallèle au plan du substrat ; et
- remplissage des ouvertures traversantes par l'encre à base de particules de métal et/ou de graphène.

En variante, réalisation des piliers peut comprendre les étapes suivantes :
- réalisation de la couche de résistance à l'abrasion, sans ouverture ; et
- insolations locales de la couche de résistance à l'abrasion, pour modifier localement sa conductivité thermique et former ainsi les piliers.

Le procédé selon l'invention, de fabrication d'un mode de réalisation du capteur tel que mentionné ci-dessus avec des bandes de chauffage et des macro-électrodes de collecte de charges, comporte avantageusement les étapes suivantes :
- dépôt d'une couche photosensible, sur un empilement comprenant le substrat, les capacités pyroélectriques et les éléments de chauffage ;
- illumination de la couche photosensible depuis le côté du substrat, à l'aide d'un faisceau lumineux de gravure dont la puissance est adaptée pour qu'il traverse ledit empilement excepté là où une bande de chauffage et une macro-électrode de collecte de charges sont superposées ; et
- remplissage des ouvertures gravées dans la couche photosensible par le matériau de la couche de résistance à l'abrasion.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- les figures 1A et 1B illustrent de manière schématique un premier mode de réalisation d'un capteur de motifs thermiques selon l'invention ;
- la figure 1C illustre une variante du mode de réalisation des figures 1A et 1B ;
- les figures 2A et 2B illustrent un comparatif des performances thermiques d'un capteur de motifs thermiques selon l'art antérieur ou selon l'invention ;
- les figures 3A et 3B illustrent de manière schématique un deuxième mode de réalisation d'un capteur de motifs thermiques selon l'invention ;
- la figure 3C illustre une variante du mode de réalisation des figures 3A et 3B ; et
- les figures 4 à 6 illustrent de manière schématique différents modes de réalisation d'un procédé de fabrication d'un capteur de motifs thermiques selon l'invention.

### EXPOSÉ DÉTAILLÉ DE MODES DE RÉALISATION PARTICULIERS

Pour plus de clarté, on a représenté sur les figures les axes (Ox), (Oy) et/ou (Oz) d'un repère orthonormé. Les échelles ne sont pas respectées sur les figures, en particulier, les épaisseurs de chacun(e) des couches et/ou étages et/ou revêtement.

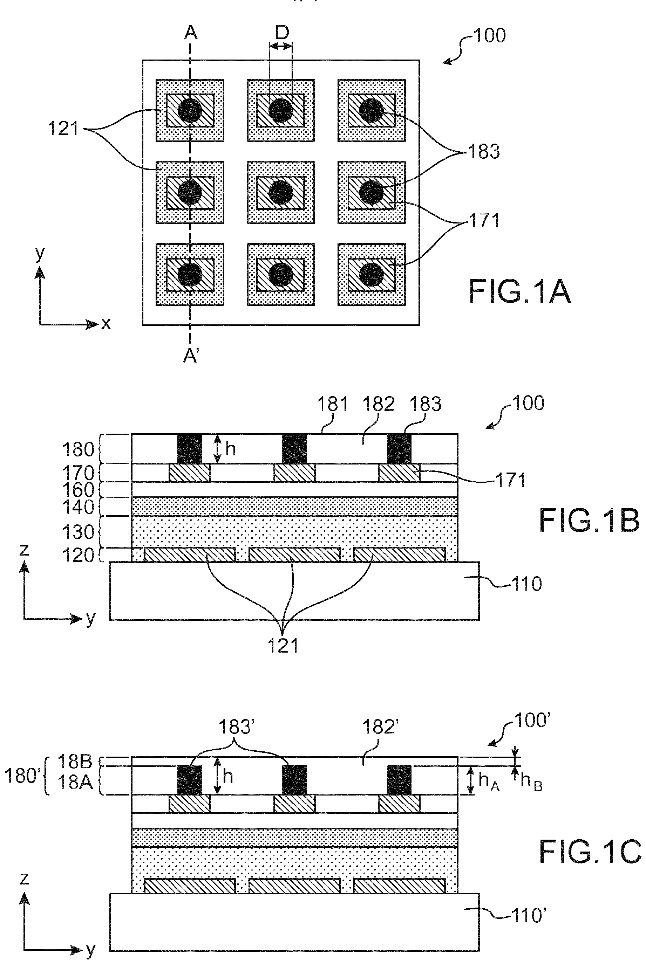

Les figures 1A et 1B illustrent de manière schématique un premier mode de réalisation d'un capteur de motifs thermiques 100 selon l'invention. La figure 1A est une vue schématique de dessus, dans un plan parallèle au plan (xOy). La figure 1B est une vue en coupe dans un plan AA' parallèle au plan (yOz).

Le capteur de motifs thermiques 100 comporte, superposés au-dessus d'un substrat 110, selon l'axe (Oz) orthogonal à une face supérieure ou inférieure dudit substrat :
- un étage 120 nommé étage d'électrodes inférieures ;
- un étage 130 comprenant un matériau pyroélectrique ;
- un étage 140 de blindage électromagnétique, formant ici en outre une électrode supérieure commune aux pixels du capteur 100 ;
- une couche d'isolation électrique 160 ;
- un étage de chauffage 170 ; et
- un revêtement de protection contre l'abrasion 180.

Cet empilement forme une matrice de pixels, dans laquelle chaque pixel comporte une capacité pyroélectrique, formée par une portion en matériau pyroélectrique disposée entre une électrode inférieure, du côté du substrat, et une électrode supérieure, du côté opposé au substrat. Ici, mais de manière non limitative, les électrodes inférieures forment des électrodes de collecte de charges telles que décrites en introduction, et l'au moins une électrode supérieure forme une électrode de référence telle que décrite en introduction.

Le substrat 110 est par exemple en verre, en silicium, en un plastique tel que le poly(téréphtalate d'éthylène) (PET), en poly(naphtalate d'éthylène) (PEN), en polyimide (film Kapton), etc. Il s'agit de préférence d'un substrat souple, par exemple un substrat en polyimide de 5 µm à 10 µm d'épaisseur, ou en un plastique tel que le PET. Il présente une face supérieure et une face inférieure parallèles entre elles, et parallèles au plan (xOy). Dans la suite, le plan du substrat désigne un plan parallèle à ces faces inférieure et supérieure.

L'étage d'électrodes inférieures 120 comporte ici une matrice d'électrodes de collecte de charges 121, disposées en lignes et en colonnes selon les axes (Ox) et (Oy). Les électrodes de collecte de charges sont constituées d'un métal tel que l'or ou l'argent, ou tout autre matériau électriquement conducteur. Elles sont réparties selon les axes (Ox) et (Oy), selon un pas de répétition inférieur ou égal à 150 µm. Le pas de répétition est par exemple de 80 µm environ, ou 90 µm, ou 50,8 µm.

L'étage 130 comprenant un matériau pyroélectrique est constitué ici d'une pleine couche constituée de poly(fluorure de vinylidène) (PVDF) ou l'un de ses dérivés (notamment le copolymère PVDF-TrFE, TrFE pour Tri-fluoro-éthylène). En variante, la couche 130 comprend du nitrure d'aluminium (AIN), du titanate de baryum (BaTiO₃), du Titano-Zirconate de Plomb (PZT), ou tout autre matériau pyroélectrique. La couche 130 s'étend ici, mais de manière non limitative, d'un seul tenant, et sans ouverture, en recouvrant l'ensemble des électrodes de collecte de charges 121 de l'étage 120.

L'étage 140 de blindage électromagnétique forme un étage électriquement conducteur, apte à être connecté à une source de potentiel constant, par exemple à la masse. Il est constitué par exemple d'une fine couche d'un matériau électriquement et thermiquement conducteur, tel qu'un mélange de poly(3,4-éthylènedioxythiophène) et de poly(styrène sulfonate) de sodium, nommé PEDOT : PSS. L'étage 140 de blindage électromagnétique forme un étage distinct de l'étage 180 de protection contre l'abrasion. Le cas échéant, il peut présenter une structure hétérogène constituée de plots thermiquement conducteurs dans une couche électriquement conductrice et thermiquement isolante.

Ici, l'étage 140 forme également une électrode de référence, commune à tous les pixels de la matrice de pixels. Les pixels sont donc délimités latéralement par les électrodes de collecte de charge 121 seules. Chaque portion de la couche 130, située au regard d'une électrode de collecte de charges 121, forme la portion en matériau pyroélectrique d'un pixel. De la même manière, chaque portion de l'étage 140, située au regard d'une électrode de collecte de charges 121, forme l'électrode de référence d'un pixel.

La couche d'isolation électrique 160 est constituée d'un matériau diélectrique, par exemple du polyimide. Elle présente de préférence une épaisseur inférieure à 5 µm, par exemple égale à 1 µm.

Selon le mode de réalisation des figures 1A et 1B, chaque pixel de la matrice de pixels comporte en outre un élément de chauffage 171. Tous les éléments de chauffage 171 sont situés dans l'étage de chauffage 170. Les éléments de chauffage 171 sont aptes à recevoir un courant de chauffage, pour fournir un chauffage par effet Joule, de manière à réaliser une détection de type actif. Ils sont constitués de préférence d'un métal, par exemple de l'or ou de l'argent.

Le revêtement de protection contre l'abrasion, 180, ou étage de protection contre l'abrasion, forme l'étage le plus externe du capteur. Une face supérieure 181 de ce revêtement, du côté opposé au substrat 110, forme une surface de contact du capteur. En fonctionnement, un objet à imager est appliqué contre ladite surface de contact 181, de manière à réaliser des échanges thermiques avec l'étage 130 comprenant un matériau pyroélectrique. Le revêtement de protection contre l'abrasion 180 a pour fonction de protéger les couches inférieures (entre la surface de contact 181 et le substrat 110) de l'usure liée à des contacts répétés avec un objet à imager, notamment avec la peau. Selon l'invention, le revêtement 180 de protection contre l'abrasion est constitué par :
- une couche de résistance à l'abrasion, 182, en matériau mauvais conducteur thermique ; et
- une pluralité de piliers 183 en matériau bon conducteur thermique.

La conductivité thermique des piliers 183 est au moins dix fois supérieure à celle de la couche de résistance à l'abrasion 182, et même au moins cent fois, voire au moins mille fois supérieure. Ce rapport entre les conductivités thermiques se retrouve dans un rapport entre les vitesses de transfert thermique, via les piliers respectivement via la couche de résistance à l'abrasion.

En fonctionnement, la chaleur circule rapidement à travers le revêtement 180 de protection contre l'abrasion, selon l'axe (Oz) orthogonal au plan du substrat 110, en passant préférentiellement par les piliers 183.

En revanche, la chaleur circule difficilement d'un pilier 183 à l'autre, en passant par la couche de résistance à l'abrasion 182. Par conséquent, la chaleur circule lentement dans le revêtement 180 de protection contre l'abrasion, dans un plan (Oxy) parallèle au plan du substrat 110.

La couche de résistance à l'abrasion 182 doit être à la fois mauvais conducteur thermique, et mauvais conducteur électrique pour éviter de court-circuiter les éléments de chauffage 171. Cela offre une grande liberté dans le choix du matériau constituant la couche de résistance à l'abrasion 182. En outre, cette dernière peut être constituée d'un matériau qui nécessite d'être en épaisseur importante pour offrir une résistance suffisante à l'égard de l'abrasion, sans préjudice de la vitesse des transferts thermiques selon (Oz).

En outre, et puisque la couche de résistance à l'abrasion 182 est en matériau mauvais conducteur thermique, la chaleur reste confinée dans un pilier 183, et passe difficilement d'un pilier 183 au pilier voisin, et donc d'un pixel au pixel voisin. On limite ainsi une diffusion latérale de la chaleur dans le revêtement de protection contre l'abrasion 180, qui sinon nuirait à la qualité de l'image acquise au niveau des capacités pyroélectriques.

Les piliers 183 sont constitués par exemple d'un matériau présentant une conductivité thermique supérieure ou égale à 50 W.m⁻¹K⁻¹, et même supérieure ou égale à 100 W.m⁻¹K⁻¹, par exemple entre 100 W.m⁻¹K⁻¹ et 500 W.m⁻¹K⁻¹.

Les piliers 183 comprennent par exemple un métal tel que l'argent, l'or, le cuivre, l'aluminium, etc. Ils sont par exemple réalisés à l'aide d'une encre à base d'un métal, en particulier une encre à base d'argent. Lorsque les piliers sont réalisés à l'aide d'une encre à base d'un métal, ils sont constitués de particules de métal accolées les unes aux autres, avec un pourcentage d'occupation volumique par le métal plus ou moins élevé. Les piliers présentent alors une conductivité thermique inférieure à celle du métal pur. Dans sa forme pure, l'argent présente une conductivité thermique de 429W.m⁻¹K⁻¹. Des piliers réalisés à l'aide d'une encre à base d'argent présentent une conductivité thermique inférieure à 429W.m⁻¹K⁻¹ et supérieure ou égale à 69 W.m⁻¹K⁻¹, voire supérieure ou égale à 100 W.m⁻¹K⁻¹.

En variante, les piliers 183 peuvent comprendre du graphène (matériau bidimensionnel dont l'empilement constitue le graphite, le graphite étant une forme cristallisée du carbone). Ils peuvent être entièrement constitués de graphène.

La couche de résistance à l'abrasion 182 est constituée de préférence d'un matériau présentant une conductivité thermique inférieure ou égale à 10 W.m⁻¹K⁻¹, et même inférieure ou égale à 1 W.m⁻¹K⁻¹, par exemple entre 0,1 W.m⁻¹K⁻¹ et 1 W.m⁻¹K⁻¹. Elle peut être constituée d'une résine, notamment une résine polymère comprenant du benzo-cyclo-butène (BCB) ou une résine polymère époxyde.

Elle présente avantageusement une épaisseur supérieure ou égale à 3 µm, de préférence supérieure ou égale à 10 µm (dimension selon l'axe (Oz) orthogonal au plan du substrat). Grâce aux piliers 183, cette épaisseur peut être supérieure ou égale à 30 µm, et même supérieure ou égale à 50 µm, voire même supérieure ou égale à 100 µm. De préférence, un rapport entre l'épaisseur de la couche de résistance à l'abrasion 182 et un pas de répétition des pixels du capteur est supérieur ou égal à 0,05 voire supérieur ou égal à 0,1 et même supérieur ou égal à 1.

Ici, les piliers 183 sont répartis régulièrement, en lignes et en colonnes, de sorte que chaque pixel de la matrice de pixel comporte un seul et unique pilier 183. De préférence, le centre géométrique d'un pilier 183 et le centre géométrique du pixel associé sont alignés selon un axe parallèle à l'axe (Oz).

Les piliers 183 présentent par exemple une forme de cylindre de révolution, présentant :
- un diamètre *D* (dimension dans un plan parallèle au plan du substrat 110) ; et
- une hauteur *h* (dimension selon l'axe (Oz), orthogonal au plan du substrat 110).

Ici, chaque pilier 183 s'étend, selon l'axe (Oz), sur toute l'épaisseur de la couche de résistance à l'abrasion 182, et sans dépasser au-dessus ni en-dessous de cette dernière. Chaque pilier 183 présente donc une hauteur *h* égale à l'épaisseur de la couche de résistance à l'abrasion 182.

Le diamètre *D* est inférieur au pas de pixel de la matrice de pixels, de sorte que deux piliers 183 voisins sont physiquement isolés l'un de l'autre, par une partie de la couche de résistance à l'abrasion 182. Ce diamètre *D* est compris par exemple 10 µm et 120 µm, de préférence entre 40 µm et 60 µm.

Dans des variantes où les piliers présentent une section non circulaire dans un plan parallèle au plan du substrat, le diamètre *D* est défini comme étant la plus grande longueur mesurée sur le pilier, selon un axe rectiligne situé dans un plan parallèle au plan du substrat.

La figure 1C illustre, selon une vue en coupe dans un plan parallèle au plan (yOz), une variante 100' du mode de réalisation des figures 1A et 1B. Cette variante 100' ne diffère de celle des figures 1A et 1B qu'en ce que les piliers 183' ne s'étendent pas sur toute l'épaisseur de la couche de résistance à l'abrasion 182'. On peut alors distinguer deux régions superposées, dans le revêtement 180' de protection contre l'abrasion :
- un étage inférieur 18A, du côté du substrat 110', recevant les piliers 183' ; et
- un étage supérieur 18B, du côté opposé au substrat 110', sans pilier.

L'étage inférieur 18A présente la même hauteur *h_{A}* que les piliers (dimension selon (Oz)). Les piliers 183' s'étendent dans l'étage inférieur 18A, sur toute son épaisseur, sans dépasser au-dessus ni en-dessous de ce dernier.

L'étage supérieur 18B présente une hauteur *h_{B}* inférieure ou égale à 5% de la hauteur *h_{A}* des piliers (dimension selon (Oz)). Dit autrement, une différence entre la hauteur des piliers 183' et la hauteur totale *h* de la couche de résistance à l'abrasion 182' est inférieure ou égale à 5% de la hauteur *h_{A}* des piliers. En pratique, cette différence est généralement inférieure ou égale à 1 µm. L'étage supérieur réalise une encapsulation des piliers 183'. Grâce à son épaisseur, ou hauteur réduite, on conserve les avantages mentionnés ci-avant.

Selon d'autres variantes, non représentées, les piliers présentent des sections non circulaires dans des plans parallèles au plan du substrat, par exemple des sections carrés ou rectangulaires.

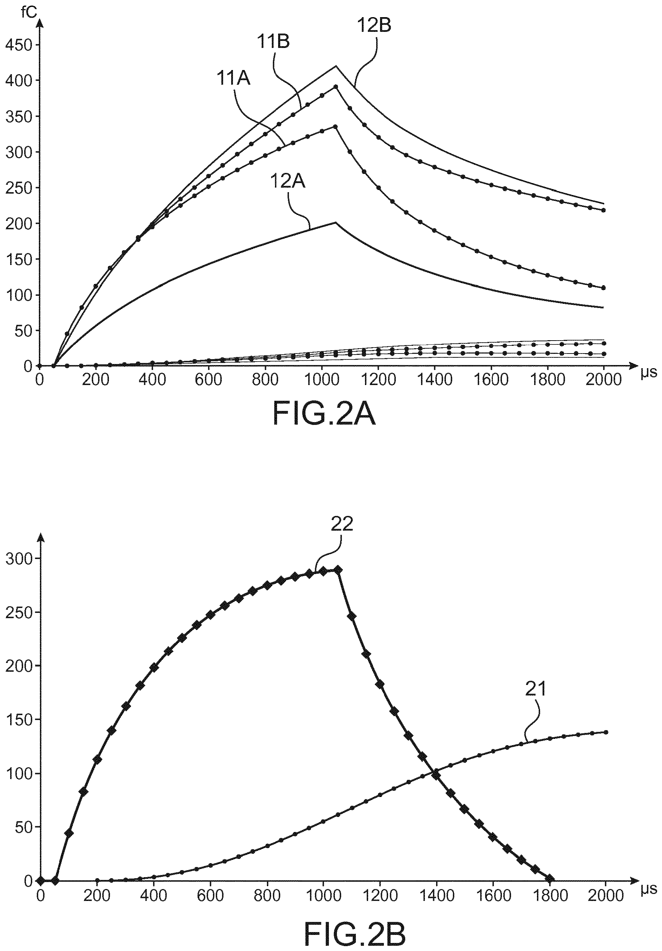

Les figures 2A et 2B illustrent un comparatif entre :
- un capteur de motifs thermiques selon l'invention, du type de celui illustré aux figures 1A et 1B, avec un revêtement de protection contre l'abrasion d'épaisseur 10 µm, des piliers en argent ; et
- un capteur de motifs thermiques selon l'art antérieur, avec une couche de protection homogène en PET (polyéthylène téréphtalate) d'épaisseur 10 µm.

Dans les deux cas, les pixels sont répartis selon un maillage carré de pas égal à 80 µm.

Sur la figure 2A, les courbes 11A et 11B, illustrent, en fonction du temps, une quantité de charges générées (capacité électrique) au niveau d'un pixel du capteur selon l'art antérieur, lorsque le pixel est surmonté par de l'eau (matériau thermiquement équivalent à la peau, et donc à une crête d'une empreinte papillaire), respectivement par de l'air (équivalent à une vallée d'une empreinte papillaire).

Les courbes 12A et 12B, illustrent, en fonction du temps, une quantité de charges générées au niveau d'un pixel du capteur selon l'invention, lorsque le pixel est surmonté par de l'eau, respectivement par de l'air.

Dans ces différentes simulations, l'élément de chauffage associé au pixel est activé pendant 1 ms.

La différence entre les courbes associées respectivement à l'air et à l'eau est bien plus importante dans le cas du capteur selon l'invention. L'invention permet donc d'améliorer le contraste d'une image acquise à l'aide du capteur de motifs thermiques.

En outre, la différence entre les deux courbes associées respectivement à l'air et à l'eau prend des valeurs non négligeables dès le début de la mesure (à peine 100 µs), alors que dans l'art antérieur il faut attendre environ 1 milliseconde avant d'obtenir un contraste satisfaisant. L'invention permet donc de réduire (ici d'un facteur 10) une vitesse de lecture des pixels du capteur de motifs thermiques.

La figure 2B illustre la différence, en fonction du temps, entre le nombre de charges pyroélectriques générées dans un pixel surmonté par de l'eau ou par de l'air, respectivement dans un capteur de motifs thermiques selon l'art antérieur (courbe 21) et dans un capteur de motifs thermiques selon l'invention (courbe 22).

On retrouve les observations mentionnées ci-avant :
- augmentation du contraste (ici d'un facteur 5 après une milliseconde), et
- augmentation de la vitesse de chauffage (et de refroidissement) : la courbe 22 prend rapidement des valeurs élevées (puis retrouve rapidement des valeurs basses).

L'effet sur le contraste permet de réduire une puissance électrique fournie aux éléments de chauffage, sans que cela n'affecte le contraste en comparaison avec l'art antérieur.

L'augmentation des vitesses de chauffage et de refroidissement du pixel permet de réduire une durée nécessaire pour lire l'ensemble des pixels d'un capteur de motifs thermiques.

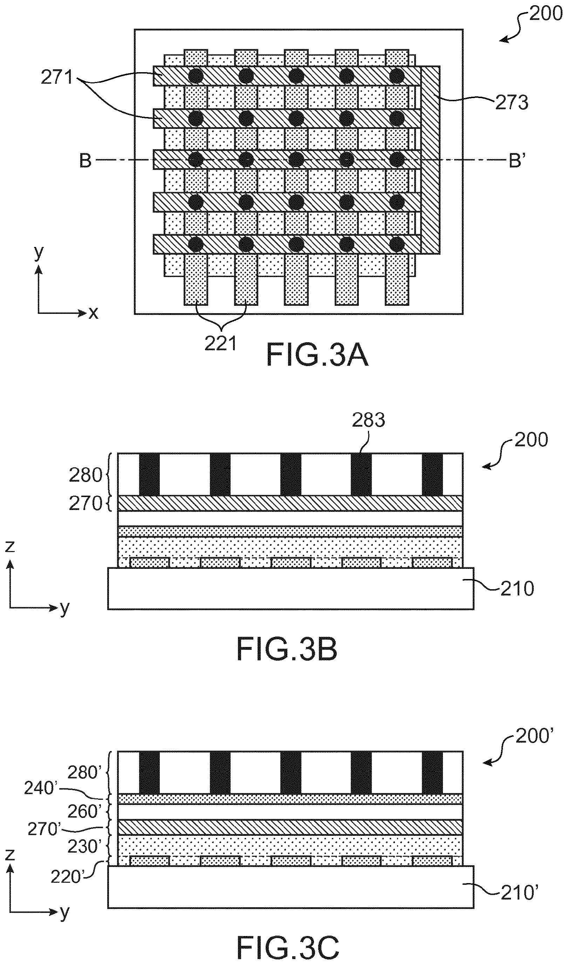

Les figures 3A et 3B illustrent de manière schématique un deuxième mode de réalisation d'un capteur de motifs thermiques 200 selon l'invention. La figure 3A est une vue schématique de dessus, dans un plan parallèle au plan (xOy). La figure 3B est une vue en coupe dans un plan BB' parallèle au plan (xOz).

Dans ce deuxième mode de réalisation, chaque pixel comporte un élément de chauffage, et ces éléments de chauffage sont mis à profit pour réaliser un adressage passif des pixels du capteur.

Les éléments de chauffage d'une même ligne de pixels sont reliés électriquement entre eux pour former une bande de chauffage 271. Chaque bande de chauffage 271 est configurée pour pouvoir être activée indépendamment des autres bandes de chauffage. En d'autres termes, les éléments de chauffage des pixels d'une même ligne de pixels sont aptes à chauffer les portions en matériau pyroélectrique des pixels de ladite ligne, indépendamment des éléments de chauffage des pixels des autres lignes. Les bandes de chauffage 271 présentent chacune une première extrémité, adaptée à être connectée à un potentiel électrique non nul, et une seconde extrémité, reliée de préférence à la masse. Ici, les secondes extrémités de toutes les bandes de chauffage sont reliées entre elles par l'intermédiaire d'une portion conductrice 273.

En outre, les électrodes de collecte de charges d'une même colonne de pixels sont reliées électriquement entre elles pour former une macro-électrode de collecte de charges 221. Chaque macro-électrode de collecte de charges 221 est formée par une bande électriquement conductrice, en contact avec les portions en matériau pyroélectrique des pixels de ladite colonne de pixels, et distincte des bandes électriquement conductrices formant les macro-électrodes de collecte de charges des autres colonnes de pixels.

Chaque macro-électrode de collecte de charges 221 permet de mesurer la somme des charges pyroélectriques, générées dans une même colonne de pixels. Si l'on n'active à chaque instant qu'une seule des bandes de chauffage 271, dans chaque colonne de pixels il n'y a qu'un seul pixel qui génère des charges pyroélectriques. Les charges pyroélectriques collectées par la macro-électrode de collecte de charges 221 se rapportent alors à cet unique pixel. On réalise ainsi un adressage passif des pixels du capteur.

Les termes « ligne » et « colonne » peuvent être échangés, ce qui correspondrait à une simple rotation à 90° du capteur.

Ici, les électrodes de collecte de charges d'une même colonne de pixels sont réparties, selon l'axe (Ox), selon un pas de répétition inférieur ou égal à 150 µm, par exemple 90 µm, ou 80 µm, ou 50,8 µm.

Les bandes de chauffage 271 de l'étage de chauffage 270 sont réparties ici selon l'axe (Oy), de préférence selon un pas de répétition identique au pas de répétition des macro-électrodes de collecte de charge 221.

Chaque pixel de la matrice de pixel est délimité latéralement par l'intersection entre une macro-électrode de collecte de charges 221, et une bande de chauffage 271. En particulier, chaque pixel est délimité latéralement, dans des plans parallèles au plan du substrat 220, par l'intersection entre la projection orthogonale d'une macro-électrode de collecte de charges 221 dans un tel plan, et la projection orthogonale d'une bande de chauffage 271 dans ce même plan.

Chaque pixel reçoit un unique pilier 283 de l'étage 280 de protection contre l'abrasion. Ce pilier s'étend donc, dans l'étage 280 de protection contre l'abrasion, à l'intérieur d'une région délimitée, dans des plans parallèles au plan du substrat 220, par l'intersection entre la projection orthogonale d'une macro-électrode de collecte de charges 221 dans un tel plan, et la projection orthogonale d'une bande de chauffage 271 dans ce même plan.

La figure 3C illustre une variante 200', qui ne diffère du mode de réalisation des figures 3A et 3B que par l'ordre d'empilement des différentes couches, étages et revêtements constituant le capteur. En particulier, le capteur de motifs thermiques 200' comporte, superposés dans cet ordre au-dessus du substrat 210' :
- l'étage 220' d'électrodes de collecte de charges, réparties en macro-électrodes parallèles entre elles ;
- l'étage 230' comprenant un matériau pyroélectrique ;
- l'étage de chauffage 270', comportant des bandes de chauffage parallèles entre elles, chaque bande de chauffage pouvant former également une électrode référence commune à tous les pixels d'une ligne de pixels;
- la couche 260' d'isolation électrique ;
- l'étage 240' de blindage électromagnétique ; et
- le revêtement 280' de protection contre l'abrasion.

Dans ces deux variantes, l'étage de chauffage s'étend entre l'étage comprenant un matériau pyroélectrique et le revêtement de protection contre l'abrasion, avec le cas échéant des couches intercalaires entre l'étage de chauffage et l'étage comprenant un matériau pyroélectrique, respectivement entre l'étage de chauffage et le revêtement de protection contre l'abrasion.

L'invention n'est pas limitée aux exemples décrits ci-dessus, et de nombreuses variantes peuvent être mises en œuvre sans sortir du cadre de l'invention.

En particulier, l'invention s'applique à tout type de capteur thermique comportant des capacités pyroélectriques, avec ou sans éléments de chauffage, avec des éléments de chauffage distincts ou regroupés en bandes de chauffage. En particulier, l'invention n'est pas limitée à une détection de type actif, et couvre également des capteurs adaptés à une détection de type passif, sans élément de chauffage pour chauffer les portions en matériau pyroélectrique.

L'invention n'est pas non plus limitée à un agencement des pixels tel que l'électrode inférieure forme l'électrode de collecte de charge. La collecte des charges pyroélectriques pourrait se faire par l'électrode supérieure.

L'invention s'applique plus particulièrement à des capteurs dans lesquels une distance entre la surface de contact et le plan des faces supérieures des électrodes inférieures des capacités pyroélectriques, est supérieure ou égale à 25% du pas de pixel du capteur, voire 50% de ce pas de pixel (revêtement de protection contre l'abrasion épais). De manière avantageuse, cette distance reste cependant inférieure ou égale audit pas de pixel.

Lorsque les dimensions du pixel le permettent, chaque pixel de la matrice de pixels peut comporter une pluralité de piliers.

Le capteur peut inclure au moins un circuit de lecture, pour mesurer une quantité de charges collectée par une électrode de collecte de charges, et, le cas échéant, au moins un circuit de pilotage du chauffage, pour l'envoi de signaux électriques permettant de chauffer les pixels du capteur par l'intermédiaire des éléments de chauffage. Il peut comporter, en outre, un circuit électronique de traitement apte à construire une image globale d'un motif thermique, à partir de mesures réalisées au niveau de chacun des pixels du capteur.

Le motif thermique pouvant être imagé par le capteur peut être une empreinte papillaire, ou tout autre motif associé à un objet ayant une capacité thermique et une chaleur massique.

La couche de résistance à l'abrasion peut être constituée d'un matériau électriquement isolant. Le revêtement de protection contre l'abrasion forme alors, dans son ensemble, un revêtement électriquement isolant puisque les piliers électriquement conducteurs sont isolés les uns des autres par le matériau électriquement isolant de la couche de résistance à l'abrasion. On évite ainsi de court-circuiter des éléments de chauffage situés directement en-dessous.

En variante, le revêtement de protection contre l'abrasion peut être électriquement conducteur, et le cas échéant assurer également une fonction de protection à l'égard des décharges électrostatiques. De préférence, sa conductivité électrique est suffisamment faible devant celle des éléments de chauffage pour ne pas perturber leur fonctionnement, mais suffisante pour décharger une décharge électrostatique.

On décrit dans la suite différents modes de réalisation avantageux, pour réaliser le revêtement de protection contre l'abrasion selon l'invention.

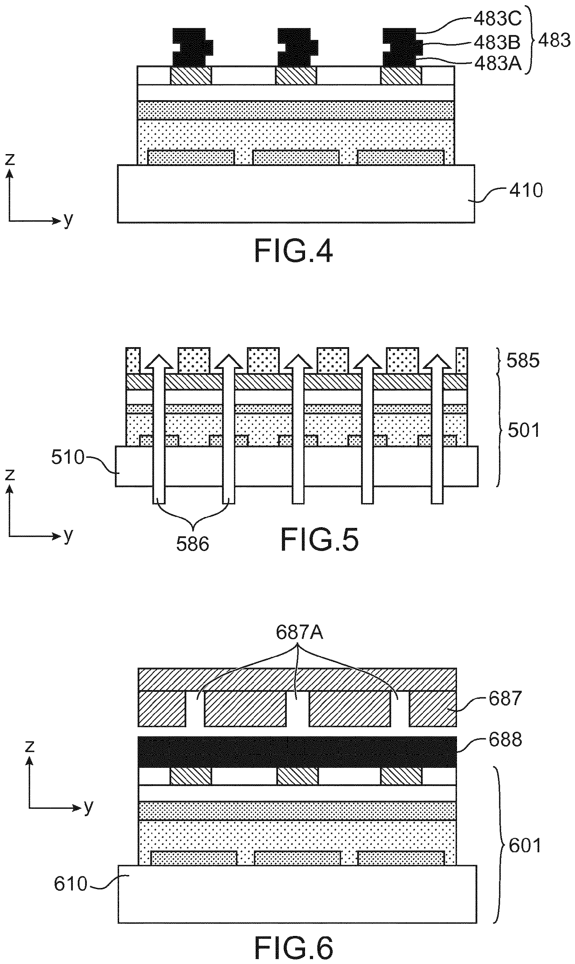

Selon un premier mode de réalisation, illustré de façon schématique en figure 4, les piliers 483 du revêtement de protection contre l'abrasion sont formés par dépôts localisés d'une encre métallique, par exemple à l'aide d'une imprimante à jet d'encre.

Afin de réaliser des piliers de hauteur élevée, supérieure à 15 µm, on peut déposer successivement plusieurs séries de piliers élémentaires 483A, 483B, 483C, chaque pilier étant alors formé par la superposition, selon l'axe (Oz), de plusieurs piliers élémentaires. Il n'est pas nécessaire que l'alignement latéral et transverse (dans un plan parallèle au plan du substrat 410) des piliers élémentaires 483A, 483B, 483C soit parfait.

On dépose ensuite un matériau résistant à l'abrasion et thermiquement isolant, qui s'insère entre les piliers et forme la couche de résistance à l'abrasion.

En variante, on peut déposer d'abord la couche de résistance à l'abrasion de sorte qu'elle s'étende sans ouverture au-dessus du substrat, puis la transformer aux emplacements des piliers. La transformation désigne ici une gravure locale, ou une insolation locale qui modifie localement les propriétés physique du matériau, en particulier sa conduction thermique. Le cas échéant, le procédé comporte ensuite une étape de réalisation des piliers dans les ouvertures gravées.

Pour graver la couche de résistance à l'abrasion aux emplacements souhaités, on peut utiliser simplement un masque comportant des ouvertures aux emplacements souhaités des piliers.

La figure 5 illustre une variante, tirant avantage de l'agencement illustré aux figures 3A à 3C, dans lequel les électrodes de collecte de charges d'une même colonne de pixels sont formées ensemble d'un seul tenant en une même macro-électrode, les éléments de chauffage d'une même ligne de pixels sont formés ensemble d'un seul tenant en une même bande de chauffage, et les piliers se trouvent à l'intersection entre la projection orthogonale d'une bande de chauffage et la projection orthogonale d'une macro-électrode de collecte de charges.

Dans le procédé de la figure 5, on dépose, sur un empilement 501 comportant le substrat 510, les capacités pyroélectriques et les éléments de chauffage, une couche 585 en matériau photosensible.

Ensuite, on isole la couche 585 en matériau photosensible par l'arrière, c'est-à-dire depuis le côté du substrat 510. Les différents éléments composant l'empilement 501 sont sensiblement transparents à la longueur d'onde du faisceau lumineux d'insolation 586, excepté les macro-électrodes de collecte de charges et les bandes de chauffage, en métal. La puissance du faisceau lumineux d'insolation 586 est adaptée pour que ledit faisceau traverse l'empilement 501, excepté aux emplacements où une macro-électrode de collecte de charges et une bande de chauffage sont superposées selon l'axe (Oz). Ainsi, la couche 585 en matériau photosensible est gravée partout, excepté à ces emplacements.

On dépose ensuite le matériau de la couche de résistance à l'abrasion dans les ouvertures gravées de la couche 585 en matériau photosensible. Ensuite, on grave les portions subsistantes de ladite couche 585 en matériau photosensible, et on les remplit par le matériau des piliers.

On réalise ainsi un auto-alignement des piliers sur les pixels de la matrice de pixels.

Quel que soit le procédé mis en œuvre pour réaliser une couche de résistance à l'abrasion comportant des ouvertures gravées, différentes solutions peuvent être mises en œuvre pour remplir ces ouvertures avec le matériau des piliers.

Selon une première variante, le remplissage se fait par sérigraphie, avec une encre à base d'un métal tel que l'argent qui est déposée sur la couche de résistance à l'abrasion, et raclée pour l'amener dans les ouvertures gravées. La couche de résistance à l'abrasion est constituée avantageusement d'un matériau sur lequel l'encre n'adhère pas, de sorte que l'encre se fixe uniquement dans les ouvertures gravées. Pour cela, la couche de résistance à l'abrasion peut comprendre ou être constituée de benzo-cyclo-butène, avantageusement recuit à une température supérieure ou égale à 150°C. Un recuit sous vide peut être mis en œuvre pour aider à la pénétration de l'encre dans les ouvertures gravées, par exemple à une pression inférieure ou égale à 10 mbar.

Selon une autre variante, on peut faire croître un métal depuis le fond des ouvertures gravées, à partir du métal des bandes de chauffage affleurant au fond desdites ouvertures gravées. Cette variante utilise un bain comportant des particules de métal mélangées avec un catalyseur.

Dans ces deux variantes, une région supérieure des ouvertures gravées peut être réservée à une fine couche d'encapsulation recouvrant et protégeant les piliers situés en-dessous.

Dans chacun des procédés décrits ci-dessus, la couche de résistance à l'abrasion peut être réalisée par plusieurs dépôts successifs de couches élémentaires qui se superposent les unes aux autres selon l'axe (Oz).

La figure 6 illustre un troisième mode de réalisation, utilisant un tampon 687 dont les creux et les bosses sont adaptés aux positions souhaitées des piliers.

Ici, une pleine couche 688 d'une encre métallique est déposée au-dessus d'un empilement 601 comportant le substrat 610, les capacités pyroélectriques et les éléments de chauffage. On vient ensuite appuyer le tampon 687 présentant des creux 687A aux emplacements souhaités des piliers, de manière à ne conserver l'encre qu'aux emplacements de ces creux 687A.

De nombreuses variantes utilisant un tampon peuvent être mises en œuvre, dans lesquelles :
- on dépose des gouttelettes d'une encre métallique au lieu d'une pleine couche d'encre métallique, avant d'appuyer le tampon ;
- on remplit les creux du tampon par une encre métallique, puis on applique l'ensemble sur l'empilement tel que défini ci-dessus, de sorte que l'encre dans les creux du tampon adhère à l'empilement et se détache du tampon lorsqu'on retire ce dernier ;
- on dépose une gouttelette d'encre métallique à l'entrée de chaque creux du tampon, puis on applique l'ensemble sur l'empilement tel que défini ci-dessus, de sorte que les gouttelettes d'encre adhèrent à l'empilement et se détachent du tampon lorsqu'on retire ce dernier ;
- on applique l'encre métallique plutôt sur les bosses du tampon, puis on applique l'ensemble sur l'empilement tel que défini ci-dessus, de sorte que l'encre sur les bosses du tampon adhère à l'empilement et se détache du tampon lorsqu'on retire ce dernier (la position des creux et des bosses du tampon est adaptée en conséquence) ; etc.

De nombreux autres procédés peuvent être mis en œuvre, utilisant ou non une encre pour réaliser les piliers du revêtement de protection contre l'abrasion, et pouvant utiliser une encre à base de particules de métal et/ou à base de particules de graphène.

Par exemple, on peut utiliser une colle anisotrope comportant des billes métalliques, par exemple en argent, de dimensions adaptées. On dépose une couche de cette colle sur un empilement tel que décrit en référence à la figure 6, puis on exerce une force de pression sur ladite couche de colle de manière à écraser les billes métalliques. Chaque bille métallique forme ainsi un pilier selon l'invention. De préférence, la force de pression est exercée en même temps qu'un chauffage qui permet de polymériser la colle recevant les billes métalliques, laquelle forme alors la couche thermiquement isolante du revêtement de protection contre l'abrasion. Le cas échéant, une fine couche de polyimide est intercalée entre la couche de colle anisotrope et une surface d'application de la force de pression, pour éviter que la colle n'adhère à ladite surface d'application.

Selon un autre exemple, les piliers métalliques peuvent être réalisés à l'aide de techniques dérivées de celle de la soudure dite « flip chip ». Une telle soudure est dédiée habituellement à la connexion électrique entre des pistes électriquement conductrices superposées selon l'axe (Oz), et utilise une bille métallique intercalée entre ces deux pistes, selon l'axe (Oz). Par exemple, on dépose un isolant électrique sur un empilement tel que décrit en référence à la figure 6, puis on grave des ouvertures aux emplacements prévus pour les piliers, et on remplit ces ouvertures de cuivre. Enfin, on forme les piliers sur les dépôts de cuivre par des techniques de dépôt d'étain-plomb sur cuivre.

## Revendications

1. Capteur (100 ; 100' ; 200 ; 200') de motifs thermiques comportant plusieurs pixels disposés sur un substrat (110; 110'; 210; 210'; 410; 510; 610), chaque pixel comportant au moins une capacité pyroélectrique formée par au moins une portion de matériau pyroélectrique disposée entre au moins une électrode inférieure et au moins une électrode supérieure, avec l'électrode inférieure disposée entre le substrat et la portion de matériau pyroélectrique, ledit capteur comprenant un revêtement externe dit de protection contre l'abrasion (180 ; 180' ; 280 ; 280'), situé du côté opposé au substrat, **caractérisé en ce que** le revêtement de protection contre l'abrasion (180 ; 180' ; 280; 280') comprend une couche dite couche de résistance à l'abrasion, et une pluralité de piliers (183 ; 183' ; 283 ; 483) répartis dans la couche de résistance à l'abrasion (182 ; 182'), les piliers présentant une conductivité thermique strictement supérieure à celle de la couche de résistance à l'abrasion.

2. Capteur (100 ; 100' ; 200 ; 200') selon la revendication 1, **caractérisé en ce que** le revêtement de protection contre l'abrasion (180 ; 180' ; 280 ; 280') présente une épaisseur (*h*) supérieure ou égale à 5% d'un pas de répétition des pixels du capteur (100 ; 100' ; 200 ; 200') de motifs thermiques.

3. Capteur (100 ; 100' ; 200 ; 200') selon la revendication 1 ou 2, **caractérisé en ce que** le revêtement de protection contre l'abrasion (180 ; 180' ; 280; 280') présente une épaisseur (*h*) supérieure ou égale à 3 µm.

4. Capteur (100') selon l'une quelconque des revendications 1 à 3, **caractérisé en ce que** l'épaisseur du revêtement de protection contre l'abrasion (180') est supérieure ou égale à la hauteur (*h_{A}*) des piliers (183'), avec ladite épaisseur et ladite hauteur définies chacune selon un axe orthogonal au plan du substrat (110'), et **en ce qu'**une différence entre l'épaisseur (*h*) du revêtement de protection contre l'abrasion et la hauteur (*h_{A}*) des piliers est inférieure ou égale à 5 % de la hauteur (*h_{A}*) des piliers .

5. Capteur (100 ; 100' ; 200 ; 200') selon l'une quelconque des revendications 1 à 4, **caractérisé en ce que** chaque pixel du capteur comporte une portion du revêtement de protection contre l'abrasion (180 ; 180' ; 280 ; 280'), ladite portion comportant un unique pilier (183 ; 183' ; 283 ; 483).

6. Capteur (100 ; 100' ; 200 ; 200') selon l'une quelconque des revendications 1 à 5, **caractérisé en ce que** les piliers (183 ; 183' ; 283 ; 483) du revêtement de protection contre l'abrasion présentent une conductivité thermique au moins dix fois supérieure à celle de la couche de résistance à l'abrasion (182 ; 182').

7. Capteur (100 ; 100' ; 200 ; 200') selon l'une quelconque des revendications 1 à 6, **caractérisé en ce que** les piliers (183 ; 183' ; 283 ; 483) du revêtement de protection contre l'abrasion comprennent un métal ou du graphène.

8. Capteur (100 ; 100' ; 200 ; 200') selon l'une quelconque des revendications 1 à 7, **caractérisé en ce que** la couche de résistance à l'abrasion (182 ; 182') comprend un matériau à base de benzo-cyclo-butène.

9. Capteur (100 ; 100' ; 200 ; 200') selon l'une quelconque des revendications 1 à 8, **caractérisé en ce que** la couche de résistance à l'abrasion (182 ; 182') est en matériau électriquement isolant.

10. Capteur (200 ; 200') selon l'une quelconque des revendications 1 à 9, **caractérisé en ce que** les pixels du capteur sont agencés en lignes et en colonnes, **en ce que** chaque pixel comporte en outre un élément de chauffage, apte à chauffer par effet Joule la portion en matériau pyroélectrique dudit pixel, et **en ce que** :
- les éléments de chauffage d'une même ligne de pixels sont formés ensemble d'un seul tenant, en une même bande de chauffage (271) ;
- dans chaque pixel, l'une parmi l'électrode supérieure et l'électrode inférieure forme une électrode de collecte de charges, et les électrodes de collecte de charges d'une même colonne de pixels sont formées ensemble d'un seul tenant en une macro-électrode de collecte de charges (221) ; et
- chaque pilier (283) du revêtement de protection contre l'abrasion s'étend à travers une région d'intersection entre une projection orthogonale d'une bande de chauffage (271) et une projection orthogonale d'une macro-électrode de collecte de charges (221), dans un plan parallèle au plan du substrat.

11. Capteur selon l'une quelconque des revendications 1 à 10, **caractérisé en ce que** les piliers (483) du revêtement de protection contre l'abrasion sont constitués chacun de plusieurs piliers élémentaires (483A, 183B, 483C), superposés selon un axe orthogonal au plan du substrat.

12. Procédé de réalisation du revêtement de protection contre l'abrasion (180 ; 180' ; 280; 280') d'un capteur (100 ; 100'; 200; 200') selon l'une quelconque des revendications 1 à 11, **caractérisé en ce qu'**une étape de réalisation des piliers (183 ; 183' ; 283 ; 483) comprend l'utilisation d'une encre à base de particules de métal et/ou de graphène.

13. Procédé selon la revendication 12, **caractérisé en ce que** l'étape de réalisation des piliers (483) comprend un ou plusieurs dépôts localisés de l'encre, à l'aide d'une imprimante à jet d'encre.

14. Procédé selon la revendication 12, **caractérisé en ce que** la réalisation du revêtement de protection contre l'abrasion (180 ; 180' ; 280 ; 280') comprend les étapes suivantes :
- réalisation de la couche de résistance à l'abrasion (182 ; 182'), munie d'ouvertures traversantes réparties selon un plan parallèle au plan du substrat ; et
- remplissage des ouvertures traversantes par l'encre à base de particules de métal et/ou de graphène.

15. Procédé selon la revendication 14, de fabrication d'un capteur (200 ; 200') selon la revendication 10, **caractérisé en ce que** ce qu'il comporte les étapes suivantes :
- dépôt d'une couche photosensible (585), sur un empilement (501) comprenant le substrat, les capacités pyroélectriques et les éléments de chauffage ;
- illumination de la couche photosensible (585) depuis le côté du substrat (510), à l'aide d'un faisceau lumineux de gravure (586) dont la puissance est adaptée pour qu'il traverse ledit empilement excepté là où une bande de chauffage (271) et une macro-électrode de collecte de charges (221) sont superposées ; et
- remplissage des ouvertures gravées dans la couche photosensible par le matériau de la couche de résistance à l'abrasion.

## Patentansprüche

1. Sensor (100; 100'; 200; 200') für Thermomuster, die mehrere Pixel umfassen, die auf einem Substrat (110; 110'; 210; 210'; 410; 510; 610) angeordnet sind, wobei jedes Pixel wenigstens eine pyroelektrische Fähigkeit umfasst, die ausgebildet ist durch wenigstens einen Abschnitt aus pyroelektrischem Material, der bereitgestellt ist zwischen wenigstens einer unteren Elektrode und wenigstens einer oberen Elektrode angeordnet ist, wobei die untere Elektrode zwischen dem Substrat und dem Abschnitt aus pyroelektrischem Material angeordnet ist, wobei der Sensor eine äußere Verkleidung umfasst, bezeichnet als Abriebschutzverkleidung (180; 180'; 280; 280'), die an der Seite gegenüber dem Substrat situiert ist, **dadurch gekennzeichnet, dass** die Abriebschutzverkleidung (180; 180'; 280; 280') eine Schicht umfasst, bezeichnet als abriebsfeste Schicht, und eine Vielzahl von Spalten (183; 183'; 283; 483), die in der abriebsfesten Schicht (182; 182') verteilt sind, wobei die Spalten eine thermische Leitfähigkeit aufweisen, die strikt höher ist als diejenige der abriebsfesten Schicht.

2. Sensor (100; 100'; 200; 200') nach Anspruch 1, **dadurch gekennzeichnet, dass** die Abriebschutzverkleidung (180; 180'; 280; 280') eine Stärke (h) aufweist, die größer als oder gleich 5 % eines Wiederholungsabstands der Pixel des Sensors (100; 100'; 200; 200') für Thermomuster ist.

3. Sensor (100; 100'; 200; 200') nach Anspruch 1 oder 2, **dadurch gekennzeichnet, dass** die Abriebschutzverkleidung (180; 180'; 280; 280') eine Stärke (h) aufweist, die größer als oder gleich 3 µm ist.

4. Sensor (100') nach einem der Ansprüche 1 bis 3, **dadurch gekennzeichnet, dass** die Stärke der Abriebschutzverkleidung (180') größer als die oder gleich der Höhe *(h_{A})* der Spalten (183') ist, wobei die Stärke und die Höhe jeweils gemäß einer Achse definiert sind, die orthogonal zur Ebene des Substrats (110') verläuft, und dadurch, dass eine Differenz zwischen der Stärke (*h*) der Verkleidung zum Abriebschutz und der Höhe (*h_{A}*) der Spalten geringer als oder gleich 5 % der Höhe (*h_{A}*) der Spalten ist.

5. Sensor (100; 100'; 200; 200') nach einem der Ansprüche 1 bis 4, **dadurch gekennzeichnet, dass** jedes Pixel des Sensors einen Abschnitt der Abriebschutzverkleidung (180; 180'; 280; 280') umfasst, wobei der Abschnitt eine einzelne Spalte (183; 183'; 283; 483) umfasst.

6. Sensor (100; 100'; 200; 200') nach einem der Ansprüche 1 bis 5, **dadurch gekennzeichnet, dass** die Spalten (183; 183'; 283; 483) der Abriebschutzverkleidung eine thermische Leitfähigkeit aufweisen, die mindestens zehn Mal größer ist als diejenige der abriebsfesten Schicht (182; 182').

7. Sensor (100; 100' 200; 200') nach einem der Ansprüche 1 bis 6, **dadurch gekennzeichnet, dass** die Spalten (183; 183'; 283; 483) der Abriebschutzverkleidung ein Metall oder Graphen umfassen.

8. Sensor (100; 100'; 200; 200') nach einem der Ansprüche 1 bis 7, **dadurch gekennzeichnet, dass** die abriebsfeste Schicht (182; 182') ein Material auf Basis von Benzo-Cyclo-Buten umfasst.

9. Sensor (100; 100'; 200; 200') nach einem der Ansprüche 1 bis 8, **dadurch gekennzeichnet, dass** die abriebsfeste Schicht (182; 182') aus elektrisch isolierendem Material besteht.

10. Sensor (200; 200') nach einem der Ansprüche 1 bis 9, **dadurch gekennzeichnet, dass** die Pixel des Sensors in Zeilen und in Spalten angeordnet sind, dadurch, dass jedes Pixel weiter ein Heizelement umfasst, das in der Lage ist, den Abschnitt aus pyroelektrischem Material des Pixels durch Joule-Effekt zu erhitzen, und dadurch, dass:
- die Heizelemente einer gleichen Pixelreihe zusammen einstückig zu einem einzigen Heizstreifen (271) geformt sind;
- in jedem Pixel eine von der oberen Elektrode und der unteren Elektrode eine Ladungssammelelektrode bildet, und die Ladungssammelelektroden einer einzelnen Pixelspalte zusammen einstückig zu einer Makro-Ladungssammelelektrode (221) ausgebildet sind; und
- jede Spalte (283) der Abriebschutzverkleidung sich durch einen Schnittbereich zwischen einer orthogonalen Projektion eines Heizbandes (271) und einer orthogonalen Projektion einer Makro-Ladungssammelelektrode (221) erstreckt, in einer Ebene parallel zur Ebene des Substrats.

11. Sensor nach einem der Ansprüche 1 bis 10, **dadurch gekennzeichnet, dass** die Spalten (483) der Abriebschutzverkleidung jeweils aus mehreren elementaren Zeilen (483A, 183B, 483C) konstituiert sind, die gemäß einer Achse orthogonal zur Ebene des Substrats übereinandergelegt sind.

12. Verfahren zur Herstellung der Abriebschutzverkleidung (180; 180'; 280; 280') eines Sensors (100; 100'; 200; 200') nach einem der Ansprüche 1 bis 11, **dadurch gekennzeichnet, dass** ein Schritt der Herstellung der Spalten (183; 183'; 283; 483) die Verwendung einer Tinte auf der Basis von Partikeln von Metall und/oder von Graphen umfasst.

13. Verfahren nach Anspruch 12, **dadurch gekennzeichnet, dass** der Schritt der Herstellung der Säulen (483) eine oder mehrere lokalisierte Tintenablagerungen mithilfe eines Tintenstrahldruckers umfasst.

14. Verfahren nach Anspruch 12, **dadurch gekennzeichnet, dass** die Herstellung der Abriebschutzverkleidung (180; 180'; 280; 280') die folgenden Schritte umfasst:
- Herstellung der abriebsfesten Schicht (182; 182'), ausgestattet mit durchgehenden Öffnungen, verteilt gemäß einer Ebene parallel zur Ebene des Substrats; und
- Füllen der durchgehenden Öffnungen mit derTinte auf Basis von Partikeln von Metall und/oder von Graphen.

15. Verfahren nach Anspruch 14 zum Herstellen eines Sensors (200; 200') nach Anspruch 10, **dadurch gekennzeichnet, dass** es die folgenden Schritte umfasst:
- Ablagern einer photosensiblen Schicht (585) auf einer Stapelung (501), die das Substrat, die pyroelektrischen Fähigkeiten und die Heizelemente umfasst;
- Beleuchtung der photosensiblen Schicht (585) ab der Seite des Substrats (510) mithilfe eines Gravurlichtstrahls (586), dessen Kraft dafür ausgelegt ist, die Stapelung zu durchdringen, außer dort, wo ein Heizband (271) und eine Makro-Ladungssammelelektrode (221) übereinandergelegt sind; und
- Füllen der gravierten Öffnungen in der photosensiblen Schicht mit dem Material der abriebsfesten Schicht.

## Claims

1. Thermal pattern sensor (100; 100'; 200; 200') comprising a plurality of pixels arranged on a substrate (110; 110'; 210; 210'; 410; 510; 610), each pixel having at least one pyroelectric capacitance formed by at least one portion of pyroelectric material arranged between at least one lower electrode and at least one upper electrode, with the lower electrode arranged between the substrate and the pyroelectric material portion, said sensor including an external so-called anti-abrasion protection coating (180; 180'; 280; 280'), located on the side opposite the substrate, **characterized in that** the anti-abrasion protection coating (180; 180'; 280; 280') includes a so-called abrasion-resistance layer, and a plurality of pillars (183; 183'; 283; 483) distributed in the abrasion-resistance layer (182; 182'), the pillars having a thermal conductivity strictly greater than that of the abrasion-resistance layer.

2. Sensor (100; 100'; 200; 200') according to claim 1, **characterized in that** the anti-abrasion protection coating (180; 180'; 280; 280') has a thickness (*h*) greater than or equal to 5% of a pixel repetition pitch of the thermal pattern sensor (100; 100'; 200; 200').

3. Sensor (100; 100'; 200; 200') according to claim 1 or 2, **characterized in that** the anti-abrasion protection coating (180; 180'; 280; 280') has a thickness (*h*) greater than or equal to 3 µm.

4. Sensor (100') according to any one of claims 1 to 3, **characterized in that** the thickness of the anti-abrasion protection coating (180') is greater than or equal to the height (*h_{A}*) of the pillars (183'), with said thickness and said height each defined according to an axis orthogonal to the plane of the substrate (110'), and **in that** a difference between the thickness (*h*) of the anti-abrasion protection coating and the height (*h_{A}*) of the pillars is less than or equal to 5 % of the height (*h_{A}*) of the pillars.

5. Sensor (100; 100'; 200; 200') according to any one of claims 1 to 4, **characterized in that** each pixel of the sensor comprises a portion of the anti-abrasion protection coating (180; 180'; 280; 280'), said portion comprising a single pillar (183; 183'; 283; 483).

6. Sensor (100; 100'; 200; 200') according to any one of claims 1 to 5, **characterized in that** the pillars (183; 183'; 283; 483) of the anti-abrasion protection coating have a thermal conductivity at least ten times greater than that of the abrasion-resistance layer (182; 182').

7. Sensor (100; 100'; 200; 200') according to any one of claims 1 to 6, **characterized in that** the pillars (183; 183'; 283; 483) of the anti-abrasion protection coating include a metal or graphene

8. Sensor (100; 100'; 200; 200') according to any one of claims 1 to 7, **characterized in that** the abrasion-resistance layer (182; 182') includes a benzocyclobutene-based material.

9. Sensor (100; 100'; 200; 200') according to any one of claims 1 to 8, **characterized in that** the abrasion-resistance layer (182; 182') is made of an electrically insulating material.

10. Sensor (200; 200') according to any one of claims 1 to 9, **characterized in that** the pixels of the sensor are arranged in rows and columns, **in that** each pixel also comprises a heating element capable of heating, by the Joule effect, the pyroelectric material portion of said pixel, and **in that**:
- the heating elements of the same row of pixels are formed together in a single piece, in the same heating strip (271);
- in each pixel, one of the upper electrode and lower electrode forms a charge collection electrode, and the charge collection electrodes of the same pixel column are formed together in a single piece in a charge collection macroelectrode (221); and
- each pillar (283) of the anti-abrasion protection coating extends through an intersection region between an orthogonal projection of a heating strip (271) and an orthogonal projection of a charge collection macroelectrode (221), in a plane parallel to the plane of the substrate.

11. Sensor according to any one of claims 1 to 10, **characterized in that** the pillars (483) of the anti-abrasion protection coating are each constituted by a plurality of basic pillars (483A, 183B, 483C), superimposed according to an axis orthogonal to the plane of the substrate.

12. Method for producing the anti-abrasion protection coating (180; 180'; 280; 280') of a sensor (100; 100'; 200; 200') according to any one of claims 1 to 11, **characterised in that** a step of producing the pillars (183; 183'; 283; 483) includes the use of an ink based on graphene and/or metal particles.

13. Method according to claim 12, **characterized in that** the step of producing the pillars (483) includes one or more localized depositions of ink, by means of an inkjet printer.

14. Method according to claim 12, **characterised in that** the production of the anti-abrasion protection coating (180; 180'; 280; 280') includes the following steps:
- producing the abrasion-resistance layer (182; 182'), equipped with through-openings distributed according to a plane parallel to the plane of the substrate; and
- filling the through-openings with graphene and/or metal particles based ink.

15. Method according to claim 14, for producing a sensor (200; 200') according to claim 10, **characterized in that** it comprises the following steps:
- depositing a photosensitive layer (585), on a stack (501) including the substrate, the pyroelectric capacitances and the heating elements;
- illuminating the photosensitive layer (585) from the side of the substrate (510), by means of an etching light beam (586) the power of which is suitable for passing through said stack except where a heating strip (271) and a charge collection macroelectrode (221) are superimposed; and
- filling the openings etched in the photosensitive layer with the material of the abrasion-resistance layer.
